# EUROPEAN PATENT SPECIFICATION

(11) **EP 2 156 031 B1**
(45) Date of publication and mention of the grant of the patent: **22.05.2013**
(21) Application number: 07808989.3
(22) Date of filing: 08.03.2007
(51) Int. Cl.: F02B 37/12, F02D 23/00, F01B 25/02, F04D 29/44, F04D 29/56, G05D 7/00, G05D 9/00, F02B 37/22

(54) **TURBOCHARGER WITH ADJUSTABLE THROAT**
TURBOLADER MIT VERSTELLBAREM DURCHGANG
TURBOCOMPRESSEUR POURVU D'UN ÉTRANGLEMENT RÉGLABLE

(43) Date of publication of application: 24.02.2010
(73) Proprietor: Blaylock, Jimmy L., Baxter Spring, KS 66713 (US)
(72) Inventor: BROWN, Richard, T., Joplin, MO 64804 (US)
(74) Representative: Bucks, Teresa Anne
(86) International application number: PCT/US2007/005782
(87) International publication number: WO 2008/108762

(56) References cited:
- EP-A1- 0 260 581
- DE-A1- 3 105 179
- DE-A1- 10 041 806
- FR-A1- 2 545 153
- GB-A- 1 044 176
- GB-A- 2 062 116
- GB-A- 2 143 591
- JP-A- 1 012 007
- JP-A- 7 279 680
- JP-A- 2005 330 973
- JP-U- 56 067 329
- US-A- 3 150 814
- US-A- 3 313 518
- US-A- 3 552 876
- US-A- 4 177 005
- US-A- 4 510 754
- US-A- 5 155 998
- US-A- 5 960 814

## Description

### FIELD OF THE INVENTION

The present invention relates to a turbocharger, for use with an internal combustion engine particularly where there is control over the rotational speed of an exhaust turbine rotor as a function of the boost pressure fed to the intake manifold.

### BACKGROUND OF THE INVENTION

Turbochargers are well known devices for supplying air to the intake of an internal combustion engine at pressures above atmospheric, commonly called "boost pressures" and are widely used in all forms of vehicles.

A conventional turbocharger includes a turbine rotor or wheel with a plurality of fins inside a volute turbine housing. The turbine rotor is rotated by exhaust gases from the engine which impinge upon the turbine fins. The rotor, via a connecting shaft, provides the driving torque to a compressor. Ambient air fed to the compressor creates a boost pressure that is fed to the intake manifold of the engine. The flow capacity of the exhaust turbine is a function of the casing volute areas, and the passage of the exhaust gases as it strikes the turbine fins. The flow of exhaust gas has to be regulated to control the compressor speed to create the desired boost in manifold pressure.

A typical centrifugal compressor includes an impeller driven at high speed by the turbine rotor. A diffuser surrounding the impeller causes the ambient air to increase in pressure which is directed to the intake manifold.

One particular goal with any turbocharger is the need for a quick response, i.e., prevent time lag or a delay between the time when high power output is first demanded of the engine by setting the throttle to a wide open position and the time when a boost in the inlet manifold air pressure is delivered by the compressor. In some instances a time lag could result in a dangerous driving situation when substantially instantaneous response is desired..

Others have proposed variable geometry turbines and moveable vanes for guiding, dividing, or changing the direction the exhaust gases relative to the to the turbine rotor and thereby control its rotational speed..

U.S. Patent 4, 893, 474 describes a pivoting valve member that is actuated by a spring loaded bell-crank lever to control a wastegate valve to vent the exhaust passages. Wastegates are often used in turbochargers to open at high speed to bypass a portion of the exhaust gas flow in the turbine to keep the speed of the turbocharger low and thereby maintain the intake manifold pressure below a given critical value.

U.S. Patents 4, 510, 754 and 6,073, 447 teach the use of separate first and second passages, of differing cross-sections, for the passage of exhaust gases into the volute. The passages being selectively opened and closed by a flapper valve and associated control system.

U. S. Patents 4, 565, 068 and 4,927, 325 describe an inlet opening to the volute with a concentric divided partition and a plurality of concentric fixed individual wall segments arranged in the direction of flow. The space between the wall segments create orifices to contribute uniform impingement on the turbine rotor.

U.S. Patent 4, 729, 715 provides at least one or a plurality of moveable wall members to vary the passage area, yet allowing the whole flow of exhaust gas through the volute. The wall member is a vane that includes a passage between the front and rear of the vane that becomes a nozzle to aid in distributing the passage of gas in the volute.

Others such as U.S. Patent 4,179, 247 have proposed variable area turbines (VAT) or U.S. Patent 6,272,859 a variable geometry turbine (VGT) with variable nozzle vanes or with turbine vanes individually pivotal.

Such devices usually require complex turbine volute housings and control means.

### SUMMARY OF THE INVENTION

The present invention is directed to a variable turbocharger for an internal combustion engine according to claim 1.

Another embodiment is directed to modification and or retrofitting of the inlet throat of the volute with a heat resistant fixed flow splitter to divide, equally or unequally, the flow of exhaust into an outer path and an inner path adjacent to the turbine rotor. At the downstream end of the flow splitter is a pivotal flow control gate that can be moved in the inner path from a neutral first position to a second position toward the vanes of the turbine rotor. In the second position, the flow control gate closes the inner path creating greater velocity of exhaust gas flow against the rotor and thus provide an initial rapid 'spin-up' of the turbine rotor. This reduces the volume of exhaust gas to the inner path yet increases the velocity and/or pressure upon the turbine rotor. This causes the turbocharger to reach optimal operating speed to substantially reduce or climinate harmful emissions while increasing initial engine takeoff power and reducing lag time from when speedup was first signaled by the operator.

Operation of the flow control gate can include using a microcomputer based electronic control module (ECM. Typically an ECM receives inputs relating to but not limited to vehicle speed, ambient air conditions, engine parameters as to throttle position, fuel being injected and the actual and desired boost pressures and flow control gate position. Appropriate signal from the ECM can be directed to an actuator which pivots the flow control gate. Such an actuator could be controlled pneumatically, hydraulically or electrically, e.g., solenoid.

Specifically, in one embodiment, the operation of the pivotal flow control gate is controlled by boost pressure to and through a pneumatic directional flow control valve which moves a piston in a two way air cylinder actuator. The piston is connected to a control lever attached to the pivotal flow control gate. The flow control valve and air cylinder are timely actuated by the boost pressure input upon turbocharger demand. The flow control valve is includes a spring loaded adjustment means that controls the timing and operation of the pivotal flow control gate from a first neutral position to its second operational position and vice versa.

The variable area turbocharger and its control system comprises a volute or spiral configured turbine chamber, an actuator, and a directional control valve details and operation of which are described below. A compressor typically includes an impeller connected to the turbine rotor via a shaft. The turbine chamber receives hot exhaust gases from the cylinders of an internal combustion engine via an exhaust pipe. Upon entering the turbine chamber the gases are directed into the blades of the turbine rotor and discharged therefrom.

The compressor takes ambient air via an intake, compresses and discharges air at greater than atmospheric pressure, called "boost pressure", into an engine intake manifold via a first conduit.

The control system of this invention can include a microcomputer based electronic or engine control module (ECM) which in one concept uses a boost controller to send an appropriate signal to a second conduit to operate the turbocharger control system. As is well known in the art, sensors relate to various engine parameters and conditions used by the ECM to assure maximum efficiency of the turbocharger, and are not described in detail herein.

Boost pressure via the second conduit is used to operate the turbocharger and control system as hereinafter described.

The turbocharger control system includes a turbine housing of a typical volute or spiral type having an inlet which directs the engine exhaust into the rotor and its vanes.

A fixed flow splitter divides the flow of exhaust gases entering the inlet. Such division may create equal or unequal outer and inner flow passages. A flow control gate is attached to a downstream end of the flow splitter and is pivotal from a neutral first position to a second position toward and contiguous to the rotor for timely creating and directing a higher velocity flow of exhaust gases into said rotor.

The flow control gate includes a crank arm attached to a spring biased piston within an actuator housing. First and second openings in the actuator housing allow for actuation and exhaust of boost pressure air on each side of the piston. The flow control gate can be actuated by and electric, pneumatic or hydraulic actuator controlled by an ECM.

A directional flow control valve includes a housing having a two position spool. The spool is comprised of three pistons. A spring normally urges the spool toward the right. The tension of the spring is changed by a threaded adjuster. The spool is adapted to provided directional flow control to sequentially open and close upper ports D, A, and E and lower ports B and C creating work ports and return ports during the cycle of operation of the turbocharger. In the sequence of operation, a port S at the end of the housing exhausts and directs flow against the first piston.

When the turbocharger and control system is in a first position, the engine is in a neutral or light load situation. That is, the boost pressure air is insufficient to operate the turbocharger control system.

In a typical operation, when speed up of the engine is demanded, the vehicle operator will actuate the fuel throttle. As the internal combustion engine speeds up there is an increase in exhaust gas flow via the exhaust pipe with increased rotation of the turbine rotor. Substantially simultaneously, the compressor increases boost pressure in the first conduit to the intake manifold of the engine. In accordance with this invention this initial boost pressure is passed through the second conduit to the directional control valve. This initial boost pressure along with the action of the spring is sufficient to move the flow control valve spool to the right. As a result, the initial boost pressure air flows via work ports A to B to a actuator port (the first opening) forcing the piston and a rod to the left. Exhaust air from the back side of the piston flows via a return port (the second opening) through ports C to E of the directional valve.

The movement of the crank arm actuates the flow control gate. This movement pivots the flow control gate toward and contiguous to the turbine rotor. This results in a substantially immediate speed up of the rotor, and a build up of boost pressure and thereby greatly reducing turbo time lag.

As the boost pressure increases to a given amount it passes via the second conduit to port S of the directional control valve. The pressure is sufficient to move the spool to the left against the tension of the adjustable spring. Thus, the given boost pressure to accomplish movement is determined by the tension of the adjustable spring. That is, increase spring tension requires a higher boost pressure and thus causes the flow control gate to be closed for longer time periods and vice versa.

As the engines continues speed-up the resulting boost pressure via passages A through C returns the piston, the spool and the flow control gate to the neutral position. Exhaust flow from port of the actuator piston passes via ports B through D.

In a modified engine turbocharger control the ECM receives input from a variety of sensors. Sensors provided by the vehicle manufacturer or a turbocharger manufacturer are well known in the art. The ECM is typically a programmable computer module containing algorithms to optimize the engines performance under all variable load and speed requirements along with information received from a variety of engine performance sensors.

In this invention information fed to the ECM is used to control the position of the flow control gate by means of an actuator. Such control includes actuators for providing movement, preferably two position means, for timely closing and opening the flow control gate as explained herein. Such actuators include electrical relay, solenoid or other electric proportional control, or valving that would operate either a hydraulic or pneumatic actuator. Typical of such actuators include, but not limited to, linear actuators and position sensors such as sold by MPC Products Corp. Of Skokie, IL; Accent Bearings Co. Of Addison, IL; ETI Systems of Ft. Worth, TX ; PFA pneumatic linear actuators of Fabco-Air, Inc. of Gainsville, FL; and LVDT electro-mechanical transducers as sold by Macro Sensors division of Howard A. Schaevitz Tech. Inc. of Pennsauken, NJ. These products are listed here by way of example only.

A position sensor would feed back information to the ECM as to the position of the flow control gate. Based on this and other information from sensors, appropriate correction as to the flow control gate position can be made.

An analog actuator along with sensor input to the ECM would allow the flow control gate to be in an optimal position (not necessarily fully closed) to accelerate the turbine to a desired boost at any speed and load condition. The ECM could respond to small throttle position changes to move the flow control gate only as required to make smaller changes to achieve the desired boost. This would minimize exhaust back pressure that robs horsepower and hurts fuel efficiency. As explained herein the purpose of the invention is to use the flow control gate as a means to provide a rapid increase in horsepower by a substantially immediate spin up of the turbine rotor until optimal boost pressure is obtained no matter at minimal or low load conditions or at mid range cruising at highway speeds.

The embodiments and modes of operation of the invention should not be construed as limiting to the particular forms as described. Variations and changes, as for example in the overall control of various types of internal combustion engines, e.g., gas, diesel and various vehicle types, e.g., highway, off-road, motorcycles, etc. may be made by those skilled in the art without departing from the scope and spirit of the present invention and the appended claims.

## Claims

1. A turbocharger for an internal combustion engine comprising;
a volute-type turbine housing;
said turbine housing having a turbine rotor;
said turbine housing having an inlet for directing exhaust gases from said internal combustion engine into said turbine housing;
a fixed exhaust gas flow splitter in said inlet for dividing flow of exhaust gases entering said inlet into an outer path and an inner path;
a flow control gate attached to a downstream end of the flow splitter, said flow control gate transversely hinged within said inlet for pivotal movement in the inner path toward and away from said turbine rotor from a neutral first position allowing substantial flow of exhaust gas into said turbine rotor to a second position contiguous to said turbine rotor for creating and directing a higher velocity flow of said exhaust gases to said turbine rotor; and
means to pivot said flow control gate to and from said first and second positions.

2. The turbocharger of claim 1 wherein said means to pivot said flow control gate is by an actuator having a moveable member connected to said flow control gate.

3. The turbocharger of claim 2 wherein said member is hydraulically actuated.

4. The turbocharger of claim 2 wherein said member is pneumatically actuated.

5. The turbocharger of claim 2 wherein said member is electrically actuated.

6. The turbocharger of claim 2 wherein said actuator is controlled by an ECM.

7. The turbocharger of claim 1, wherein said fixed exhaust flow splitter divides said inlet flow of exhaust gases substantially equally.

8. The turbocharger of claim 1 wherein said fixed exhaust flow splitter divides said inlet flow of exhaust gases substantially unequally.

9. The turbocharger of claim 1 including:
a compressor having an impeller driven by said turbine rotor for directing compressed air into an intake manifold of said internal combustion engine; and
means to timely pivot said flow control gate as a function of a given boost pressure of said compressed air.

10. The turbocharger of claim 9 wherein said means to pivot said flow control gate is initiated from an engine control module signal.

11. The turbocharger of claim 9 wherein said means to timely pivot said flow control gate comprises:
an adjustable directional flow control valve;
an actuator cylinder and reciprocating piston;
said flow control valve having means for receiving, directing and exhausting a portion of said compressed air to and from said actuator cylinder to reciprocate said piston; and
means connecting said piston to said flow control gate.

12. The turbocharger of claim 11 wherein said adjustable directional flow control valve comprises a valve body with a right and left end;
flow ports in said valve body for receiving and directing boost pressure air;
a two position slidable spool valve within said housing for timely controlling said flow through said openings;
spring means and a given first amount of said boost pressure normally biasing said spool to said right end position;
and means whereby a second amount of boost pressure will force said spool to a left position against said spring.

13. The turbocharger of claim 12 wherein said spring means is adjustable.

## Patentansprüche

1. Turbolader für einen internen Verbrennungsmotor, welcher Turbolader folgendes aufweist;
ein schneckenförmiges Turbinengehäuse;
wobei das besagte Turbinengehäuse einen Turbinenrotor aufweist;
wobei das besagte Turbinengehäuse einen Einlass zum Leiten von Abgasen von dem besagten internen Verbrennungsmotor in das besagte Turbinengehäuse aufweist;
einen feststehenden Abgas-Strömungsteiler in dem besagten Einlass zum Teilen des Stroms an Abgasen, die in den besagten Einlass strömen, in einen äußeren Pfad und einen inneren Pfad;
ein Strömungs-Steuergate, das an einem stromabwärts gelegenen Ende des Strömungsteilers befestigt ist, wobei das besagte Strömungs-Steuergate quer innerhalb des besagten Einlasses für eine Drehbewegung in dem inneren Pfad hin zu und weg von dem besagten Turbinenrotor von einer neutralen ersten Position gelenkig gelagert ist, wodurch ein wesentlicher Strom von Abgasen in den besagten Turbinenrotor zu einer zweiten Position angrenzend an den besagten Turbinenrotor zur Schaffung und zum Leiten eines Stroms des besagten Abgases mit höherer Geschwindigkeit an den besagten Turbinenrotor ermöglicht wird; und
Mittel zum Schwenken des besagten Strömungs-Steuergates hin zu und weg von den besagten ersten und zweiten Positionen.

2. Turbolader nach Anspruch 1, wobei das besagte Mittel zum Schwenken des besagten Strömungs-Steuergates ein Stellglied mit einem beweglichen Element ist, das mit dem besagten Strömungs-Steuergate verbunden ist.

3. Turbolader nach Anspruch 2, wobei das besagte Element hydraulisch betätigt wird.

4. Turbolader nach Anspruch 2, wobei das besagte Element pneumatisch betätigt wird.

5. Turbolader nach Anspruch 2, wobei das besagte Element elektrisch betätigt wird.

6. Turbolader nach Anspruch 2, wobei das besagte Stellglied durch ECM gesteuert wird.

7. Turbolader nach Anspruch 1, wobei der besagte feststehende Abgas-Strömungsteiler den besagten Einlassstrom an Abgasen im Wesentlichen gleichmäßig teilt.

8. Turbolader nach Anspruch 1, wobei der besagte feststehende Abgas-Strömungsteiler den besagten Einlassstrom an Abgasen im Wesentlichen ungleichmäßig teilt.

9. Turbolader nach Anspruch 1, der folgendes aufweist:
einen Kompressor mit einem von dem besagten Turbinenrotor angetriebenen Laufrad zum Leiten von verdichteter Luft in einen Ansaugkrümmer des besagten internen Verbrennungsmotors; und
Mittel zum rechtzeitigen Schwenken des besagten Strömungs-Steuergates als Funktion eines vorgegebenen Ladedrucks der besagten verdichteten Luft.

10. Turbolader nach Anspruch 9, wobei das besagte Mittel zum Schwenken des besagten Strömungs-Steuergates von einem Motorsteuermodulsignal initialisiert wird.

11. Turbolader nach Anspruch 9, wobei das besagte Mittel zum rechtzeitigen Schwenken des besagten Strömungs-Steuergates folgendes aufweist:
ein anpassbares richtungsweisendes Strömungs-Steuerventil;
einen Antriebszylinder und Hubkolben;
wobei das besagte Strömungs-Steuerventil Mittel zur Aufnahme, zum Leiten und Ausstoßen eines Teils der besagten verdichteten Luft hin zu und weg von dem besagten Antriebszylinder zum Hin- und Herbewegen des besagten Kolbens aufweist; und
Mittel, die den besagten Kolben mit dem besagten Strömungs-Steuergate verbinden.

12. Turbolader nach Anspruch 11, wobei das besagte anpassbare richtungsweisende Strömungs-Steuerventil einen Ventilkörper mit einem rechten und linken Ende aufweist;
Strömungsöffnungen in dem besagten Ventilkörper zur Aufnahme und zum Leiten der Ladedruck-Luft;
eine schiebbares Kolbenventil mit zwei Positionen innerhalb des Gehäuses für eine rechtzeitige Steuerung des besagten Stroms durch die besagten Öffnungen;
Federmittel und eine vorgegebene erste Menge an besagtem Ladedruck, die üblicherweise den besagten Steuerkolben in die besagte Position am rechten Ende vorspannen;
und Mittel, wodurch eine zweite Menge an Ladedruck den besagten Steuerkolben in eine linke Position gegen die besagte Feder drückt.

13. Turbolader nach Anspruch 12, wobei das besagte Federmittel anpassbar ist.

## Revendications

1. Turbocompresseur pour un moteur à combustion interne comprenant ;
un carter de turbine du type en volute ;
ledit carter de turbine ayant un rotor de turbine ; ledit carter de turbine ayant une entrée pour diriger des gaz d'échappement provenant dudit moteur à combustion interne dans ledit carter de turbine ;
un diviseur de flux de gaz d'échappement fixe dans ladite entrée destiné à diviser un flux des gaz d'échappement entrant dans ladite entrée entre un chemin externe et un chemin interne ;
une porte de réglage de flux fixée à une extrémité en aval du diviseur de flux, ladite porte de réglage de flux étant transversalement articulée dans ladite entrée de manière à effectuer un mouvement de pivotement dans le chemin interne vers ledit rotor de turbine et loin de celui-ci à partir d'une première position neutre permettant un écoulement important de gaz d'échappement dans ledit rotor de turbine jusqu'à une deuxième position adjacente audit rotor de turbine pour créer et diriger un écoulement à plus grande vitesse desdits gaz d'échappement vers ledit rotor de turbine ; et
un moyen destiné à faire pivoter ladite porte de réglage de flux entre lesdites première et deuxième positions.

2. Turbocompresseur de la revendication 1, dans lequel ledit moyen fait pivoter ladite porte de réglage de flux par un actionneur ayant un élément mobile relié à ladite porte de réglage de flux.

3. Turbocompresseur de la revendication 2, dans lequel ledit élément est un élément à actionnement hydraulique.

4. Turbocompresseur de la revendication 2, dans lequel ledit élément est un élément à actionnement pneumatique.

5. Turbocompresseur de la revendication 2, dans lequel ledit élément est un élément à actionnement électrique.

6. Turbocompresseur de la revendication 2, dans lequel ledit actionneur est commandé par un ECM.

7. Turbocompresseur de la revendication 1, dans lequel ledit diviseur de flux de gaz d'échappement fixe divise ledit flux d'entrée des gaz d'échappement de manière sensiblement égale.

8. Turbocompresseur de la revendication 1, dans lequel ledit diviseur de flux de gaz d'échappement fixe divise ledit flux d'entrée de gaz d'échappement de manière sensiblement inégale.

9. Turbocompresseur de la revendication 1, comportant :
un compresseur ayant une roue entraînée par ledit rotor de turbine pour diriger l'air comprimé dans un collecteur d'admission dudit moteur à combustion interne ; et
un moyen destiné à faire pivoter, de manière ponctuelle, ladite porte de réglage de flux en fonction d'une pression de suralimentation donnée dudit air comprimé.

10. Turbocompresseur de la revendication 9, dans lequel ledit moyen permettant le pivotement de ladite porte de réglage de flux est déclenché à partir d'un signal de module de commande de moteur.

11. Turbocompresseur de la revendication 9, dans lequel ledit moyen permettant le pivotement, de manière ponctuelle, de ladite porte de réglage de flux comprend :
une soupape de régulation de flux directionnel réglable ;
un vérin de commande et un piston alternatif ;
ladite soupape de régulation de flux ayant un moyen destiné à recevoir, diriger et évacuer une partie dudit air comprimé vers et depuis ledit vérin de commande afin d'animer ledit piston alternatif d'un mouvement de va-et-vient ; et
un moyen reliant ledit piston à ladite porte de réglage de flux.

12. Turbocompresseur de la revendication 11, dans lequel ladite soupape de régulation de flux directionnel réglable comprend un corps de soupape ayant des extrémités droite et gauche ;
des orifices d'écoulement dans ledit corps de soupape pour recevoir et diriger l'air sous pression de suralimentation ;
un distributeur à tiroir cylindrique pouvant coulisser en deux positions à l'intérieur dudit carter pour régler, de manière ponctuelle, ledit flux à travers lesdites ouvertures ;
un moyen de ressort et une première quantité donnée de ladite pression de suralimentation sollicitant normalement ledit tiroir cylindrique vers ladite position d'extrémité droite ;
et un moyen par lequel une deuxième quantité de pression de suralimentation va forcer ledit tiroir cylindrique vers une position gauche contre ledit ressort.

13. Turbocompresseur de la revendication 12, dans lequel ledit moyen de ressort est réglable.
